# EUROPEAN PATENT APPLICATION

(11) **EP 0 538 023 A1**
(43) Date of publication of application: **21.04.1993**
(21) Application number: 92309387.6
(22) Date of filing: 15.10.1992
(51) Int. Cl.: F16D 65/853, F16D 55/14

(54) **Self-energising disc brake**

(30) Priority: 18.10.1991 GB 9122112
(71) Applicant: LUCAS INDUSTRIES PUBLIC LIMITED COMPANY, Solihull, West Midlands B91 3TX (GB)
(72) Inventor: Parry, David, Cwmbran, Gwent, Wales (GB)
(74) Representative: Spall, Christopher John

(57) **Abstract**

In a self-energising liquid cooled disc brake, cooling liquid is supplied to the brake through a passage (42) in the shaft. The brake actuator mechanism (9, 10, 12, 13, 14) is provided with a restrictor means (43), which may be in the form of a substantially cylindrical reservoir band, to restrict the flow of cooling liquid through the pressure plates (9, 10) through substantially 360° in a radially outwards direction. In this way the cooling liquid is directed onto the friction discs (1, 2).

## Description

This invention relates to self-energising disc brakes of the liquid cooled type of the kind in which rotatable friction discs provided with linings of friction material are adapted to be brought into engagement with spaced opposed braking surfaces in a housing by an actuator mechanism comprising a pair of annular pressure plates located between the friction discs and centred by stationary pilot lugs, and balls or rollers located in co-operating inclined recesses in the adjacent faces of the pressure plates, the application of the brake is initiated by relative angular movement between the pressure plates, the pressure plates then move apart, due to the tendency for the balls or rollers to ride up ramps defined by the edges of the recesses, and into engagement with the friction discs which are urged into engagement with the braking surfaces, the pressure plates being carried round with the friction discs until one is arrested by the engagement of a lug on the plate with a drag-taking stop abutment in the housing, and the continued angular movement of the other pressure plate providing a servo action. The latter will henceforth be referred to as a self-energising disc brake of the kind set forth.

It is known from EP-A-0 128 758 to provide slots or grooves in the friction linings of brakes of the kind set forth. As the known brake is of the liquid cooled type, the slots or grooves are so chosen as to act as a reservoir for cooling liquid and to control the flow of liquid across the braking faces.

In EP-0 299 593 a self-energising brake of the kind set forth is disclosed, in which the self-energising disc brake actuation means has restrictor means to restrict the flow of cooling liquid from between a sector of the pressure plates in a radially outward direction. The space between the pressure plates therefore defines a secondary elevated reservoir from which liquid escapes to the friction discs in order to enhance cooling of the braking surfaces. In one embodiment cooling liquid is sprayed over the unit from an externally located nozzle.

There are a number of disadvantages to this known construction. The die castings are complex as cast features for the reservoir orientation and for the fluid ingress are require. Further additional pipework is required on the installation, calling for attention to ensure correct assembly. In different installations, the brake will adopt differing attitudes, in particular with regard to the reservoir and fluid ingress positions relative to the vertical.

In operation, the fluid collected in the reservoir receives no impetus and relies on a pressure head to force it to leak to the surfaces of the rotating friction discs from where centrifugal forces assist its explosion across the disc surfaces via the radial slots and grooves, radial angular displacement spreading the fluid across those surfaces.

According to one aspect of the present invention, in a self-energising disc brake of the kind set forth, the cooling fluid is supplied to the brake through at least one passage in the shaft.

According to another aspect of the present invention, the brake actuator mechanism is provided with a restrictor means to restrict the flow of cooling liquid from between the pressure plates through substantially 360° in a radially outwards direction.

The present invention allows the disadvantages of the prior art, to be overcome since, by having a substantially cylindrical reservoir band in the form of the retainer element, it is relatively easy to assemble and requires no special orientation. The brake and the fluid supply have the advantage of forming a self-contained unit with no external pipework being required. This becomes important when the brake must be installed in a limited space, for example in a transmission case. As the brake has no orientation restrictions a universal design may be adapted.

In operation, the fluid may be advantageously pumped to the centre of rotation, from where it is continuously urged, by a combination of pump pressure and centrifugal force, to escape via the rotary braking surfaces. The radial feed points in the rotary device shaft ensure the high speed distribution of the fluid to the braking surfaces.

The invention will now be described, by way of example only, with reference to the accompanying drawings, in which:-
Figure 1 is a longitudinal section through a brake of the kind set forth as known from the prior art of EP 0 299 539; and
Figure 2 is a longitudinal section through a liquid cooled brake according to the invention.

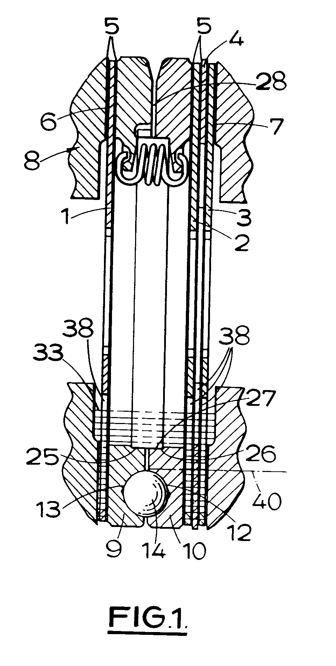

The brake illustrated in Figure 1 of the drawings is of a spreading type in which three rotatable friction discs 1,2,3 are splined for sliding movement on a rotatable shaft (not shown). A stationary planar disc 4 is disposed between the friction discs 2,3 and is keyed to a housing 8. Each rotatable disc 1,2,3 is provided on opposite sides with linings of a metallic or non-metallic friction material adapted to be brought into engagement with spaced opposed radial surfaces 6,7 in the housing 8, and opposite faces of the disc 4, by pressure plates 9,10 located between an adjacent pair of the discs 1,2 and centred by three angularly spaced pilots (not shown) of which one comprises a drag taking pin. Balls 14 are located in co-operating oppositely inclined recesses 12,13 in the adjacent faces of the pressure plates 9,10 and with which the pressure plates 9,10 constitute an actuator mechanism.

The pressure plates 9,10 are provided at their inner ends with radial sealing faces 25,26 defined by the bases of superimposed shallow recesses, and an oil seal comprising a flat circumferentially extending discontinuous ring 27 co-operates with the sealing faces so that the part-circular space 28 defined between the pressure plates 9,10 and the ring 27 constitutes a secondary elevated reservoir for liquid, preferably oil.

The housing defines a main reservoir which contains liquid to a level 40, and the elevated secondary reservoir contains liquid to a depth 33. At least the arcuate lowermost portions of the friction discs and the pressure plates are immersed in the secondary reservoir to the depth 33.

The discs may also be provided with angularly spaced oil-circulation holes 38, suitably radial slots, to facilitate the flow onto the linings and braking faces.

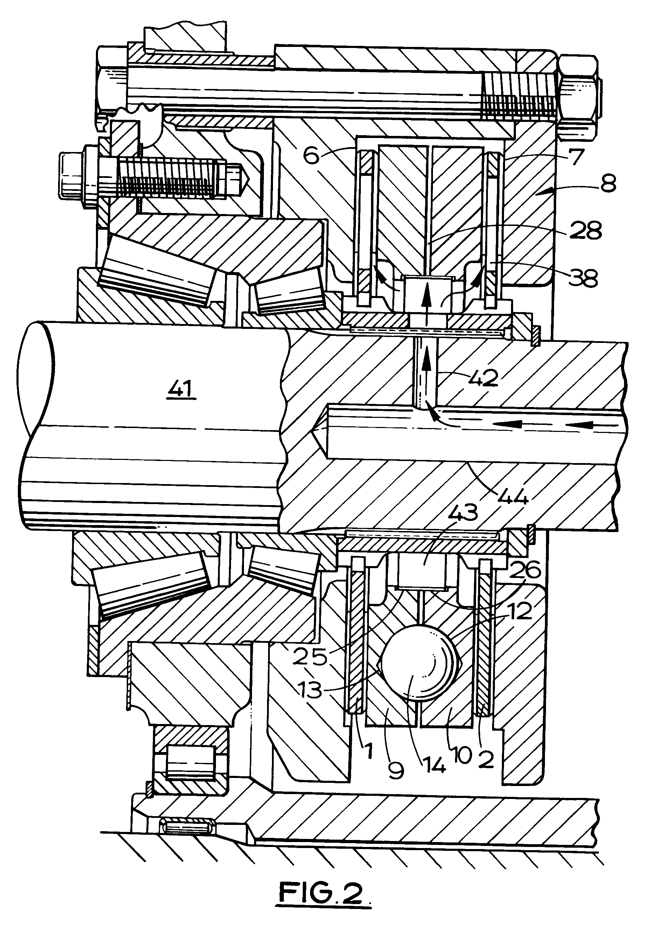

Referring now to Figure 2, corresponding reference numerals have been applied to corresponding parts. The brake of Figure 2 operates in the same manner as that of Figure 1.

A blind bore 44 is provided centrally in the drive shaft, shown in Figure 2 by reference numeral 41. At least one radial passage 42 is provided in the shaft, and is joined to the bore 44. In place of the oil seal 27 of Figure 1, a restrictor means comprising a cylindrical retainer 43 is present.

Liquid coolant is pumped along the bore 44 in the drive shaft and is communicated to the brake via the radial passage or passages 42 in the shaft. The cylindrical retainer 43 prevents the escape of coolant through the space between the brake actuating discs, the pressure plates 9,10. The coolant urged by centrifugal force from the shaft 41, is forced into the annular space between the brake inside diameter and the shaft outside diameter, from where it escapes via the oil circulation holes 38, suitably radial slots, in the friction discs 1,2 and grooves in the lining surface.

## Claims

1. A liquid cooled self-energising disc brake in which rotatable friction discs provided with linings of friction material are adapted to be brought into engagement with spaced opposed braking surfaces (6, 7) in a housing (8) by an actuator mechanism comprising a pair of annular pressure plates (9, 10) located between the friction discs (1, 2) and centred by stationary pilot lugs, and balls (14) or rollers located in co-operating inclined recesses (12, 13) in the adjacent faces of the pressure plates (9, 10), the application of the brake is initiated by relative angular movement between the pressure plates (9, 10), the pressure plates then move apart, due to the tendency for the balls (14) or rollers to ride up ramps defined by the edges of the recesses, and into engagement with the friction discs (1, 2) which are urged into engagement with the braking surfaces (6, 7), the pressure plates (9, 10) being carried round with the friction discs (1, 2) until one is arrested by the engagement of a lug on the plate with a drag-taking stop abutment in the housing, and the continued angular movement of the other pressure plate providing a servo action, characterised in that cooling liquid is supplied to the brake through at least one passage (42) in the shaft (41).

2. A liquid cooled self-energising disc brake according to claim 1, in which the actuator mechanism is provided with a restrictor means (43) to restrict the flow of cooling liquid from between the pressure plates (9, 10) in a radially outwards direction.

3. A liquid cooled self-energising disc brake according to claim 2, in which the restrictor means (43) restricts the flow of cooling liquid from between the pressure plates (9, 10) through substantially 360° in a radially outwards direction.

4. A liquid cooled self-energising disc brake according to claim 3, in which the restrictor means (43) comprises a substantially cylindrical reservoir band (43).

5. A liquid cooled self-energising disc brake in which rotatable friction discs provided with linings of friction material are adapted to be brought into engagement with spaced opposed braking surfaces (6, 7) in a housing (8) by an actuator mechanism comprising a pair of annular pressure plates (9, 10) located between the friction discs (1, 2) and centred by stationary pilot lugs, and balls (14) or rollers located in co-operating inclined recesses (12, 13) in the adjacent faces of the pressure plates (9, 10), the application of the brake is initiated by relative angular movement between the pressure plates (9, 10), the pressure plates then move apart, due to the tendency for the balls (14) or rollers to ride up ramps defined by the edges of the recesses, and into engagement with the friction discs (1, 2) which are urged into engagement with the braking surfaces (6, 7), the pressure plates (9, 10) being carried round with the friction discs (1, 2) until one is arrested by the engagement of a lug on the plate with a drag-taking stop abutment in the housing, and the continued angular movement of the other pressure plate providing a servo action, characterised in that the actuator mechanism is provided with a restrictor means (43) to restrict the flow of cooling liquid from between the pressure plates (9, 10) through substantially 360° in a radially outwards direction.

6. A liquid cooled self-energising disc brake according to claim 5 in which the restrictor means (43) comprises a substantially cylindrical reservoir band (43).

7. A liquid cooled self-energising disc brake according to claim 5 or claim 6, in which cooling liquid is supplied to the brake through at least one passage (42) in the shaft (41).

8. A liquid cooled self-energising disc brake according to any proceeding claim in which the cooling liquid is pumped to the brake.

9. A liquid cooled self-energising disc brake according to any proceeding claim in which the pressure of the cooling liquid supply facilitates the escape of the cooling liquid to the friction discs (1, 2) to enhance cooling of the brake surfaces.
